# EUROPEAN PATENT SPECIFICATION

(11) **EP 1 328 844 B1**
(45) Date of publication and mention of the grant of the patent: **01.02.2006**
(21) Application number: 01979116.9
(22) Date of filing: 10.10.2001
(51) Int. Cl.: G03B 21/16

(54) **COOLING DEVICE IN A PROJECTOR**
KÜHLEINRICHTUNG IN EINEM PROJEKTOR
DISPOSITIF DE REFROIDISSEMENT DANS UN PROJECTEUR

(30) Priority: 11.10.2000 NO 20005115
(43) Date of publication of application: 23.07.2003
(73) Proprietor: Bärd Eker Industrial Design AS, 1623 Gamble Fredrikstad (NO)
(72) Inventor: GULLIKSEN, Morten, N-0860 Oslo (NO)
(74) Representative: Onn, Thorsten
(86) International application number: PCT/NO2001/000412
(87) International publication number: WO 2002/031593

(56) References cited:
- DE-A1- 2 410 828
- DE-C2- 3 410 024
- US-A- 2 779 236
- US-A- 3 180 981
- US-A- 5 860 719
- US-B1- 6 231 191
- US-B1- 6 254 238

## Description

The present invention relates to a device for cooling a projector, where the projector comprises a light source, a suction fan having an integrated motor, a plurality of air intakes, and a louver; where the light source is disposed between one of the air intakes and the suction fan, which light source can thus emit heat to the air flowing past it.

The current tendency is that the market in general desires small, compact and lightweight products. This applies to video projectors, also. However, along with such a miniaturization of, for example, a video projector, there is also the desire that it should make as little noise as possible; preferably it should be totally quiet-running.

Theoretically it should be possible for a video projector to be noiseless, as it should be able to consist of only optical and electronic components. The reality is somewhat different, however, since one of the main components of the projector is a strong light source, at least 120 watts, which will generate substantial amounts of heat that would damage the entire device if nothing were done to remove this heat. Thus, it is necessary to provide for the cooling or alternatively the removal of the heat with the aid, for example, of fans. However, a device of this type consisting of one or more fans would create a source of noise, not least if all the components were to be made as small as conceivably possible, meaning that the fan would be very small and would have to be driven at a correspondingly high speed in order to produce a sufficiently powerful air stream over the components that are to be cooled or the heat that is to be removed.

With today's large video projectors this is not a serious problem, since in these cases there can be used large, robust fans that effectively remove the heat at low rotational speeds (RPM) also. The difficulties arise when the components are to be made as small as conceivably possible, and one must thus employ small fans that are, per se, not constructed to tolerate high temperatures. Hence, when the fan is used for removal of heat by suction of the hot air away from the overheated component(s), such as the light source, the fan itself will become heated and the bearings will become dry (the oil for lubricating the bearings dries out), and the fan will be ruined after only a brief service life.

The purpose of the invention is thus to be able to cool the motor to a temperature substantially below the temperature under which the rest of the fan must operate. That way the fan rotational speed may be kept as low as possible in order to avoid noise.

This is accomplished with a device of the type mentioned above and in the introduction of claim 1. The invented device is thus characterized in that the second air intake is arranged so that it sucks in air from the surroundings, such that the air temperature at the intake is not substantially affected by the light source; and that the air intake is connected to a duct which opens out at the upstream side of the fan motor, where the longitudinal axis of the duct at said opening is aligned to coincide substantially with the rotational axis of the motor; such that the relatively cooler air stream substantially encases the motor and forms an insulating jacket, outside of which the relatively warmer air stream is transported out of the projector, in order by this means to bring about a cooling of the motor on operation, even though the temperature of the air stream is higher than the motor is constructed to tolerate.

Additional features of the invention are disclosed in the remaining dependent claims.

The invention shall be described in more detail in the following, with reference to the drawings, wherein:
Figure 1 shows a projector having the device according to the invention.
Figure 2 is a cross-sectional view of the device along line A-A in Figure 1.
Figure 3 shows the cooling component from Figure 2 in enlarged scale.
Figure 4 is a schematic illustration in perspective of details of the fan.

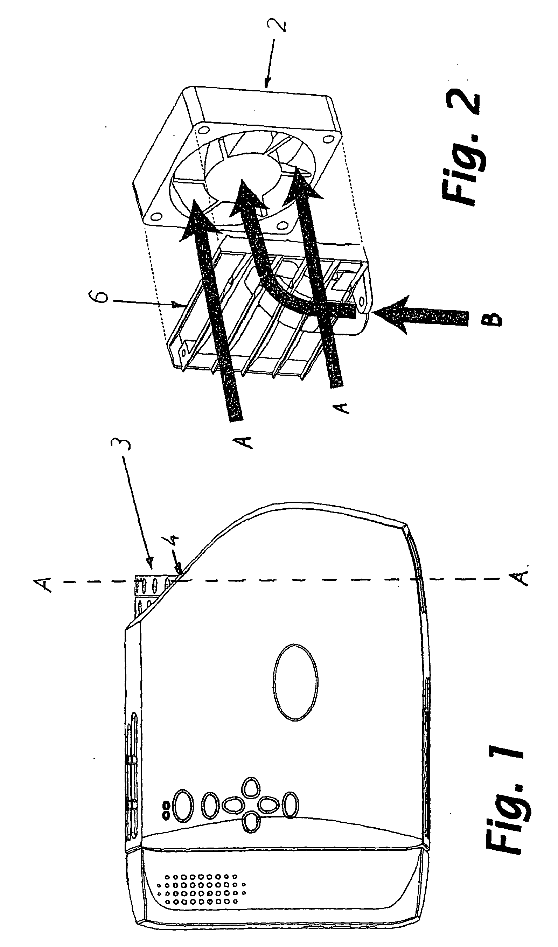

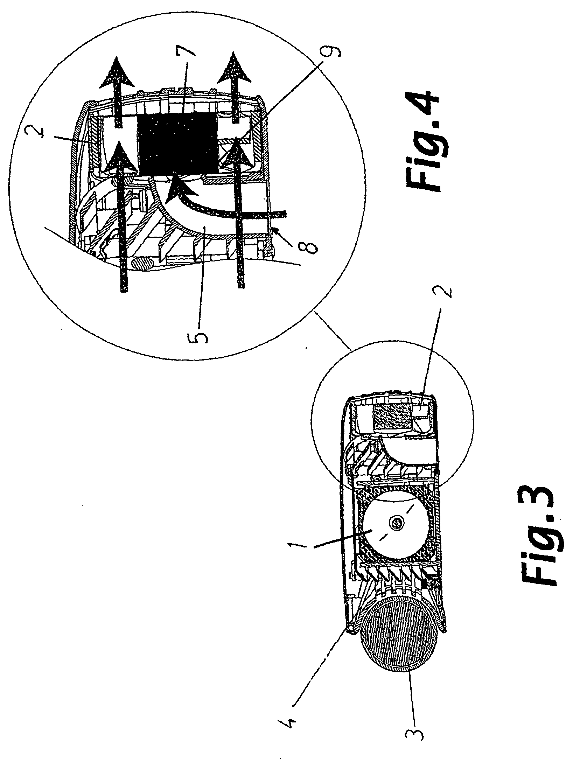

On Figure 3 is shown a light source 1 and a suction fan 2 that draws air in from the side over and around light source 1. This part of the projector, which contains the device according to the invention, extends slightly past the lens 3 so that the air intake 4 for this part is situated in front, on the same side as lens 3; see Figure 1. In order for the fan motor to survive the high temperatures coming from the air sucked in via intake 4, air is also drawn in from the underside of the projector through the inlet 8 to a duct 5. In front of fan 2 is arranged a louver 6; see Figure 4 and Figure 2. This louver has the function, *inter alia*, of preventing light from being emitted to the surroundings through the fan. In addition, the slats of the louver are disposed in a slanted position so that the vertical velocity of the air flowing obliquely toward the fan corresponds to the vertical velocity of the air flowing in from inlet 8, but oriented in the opposite direction.

The vertical components of the two air streams thus cancel each other out, and the cold air from inlet 8 will flow evenly along both sides of the motor 7 of fan 2. There will occur no turbulence on the side facing the outside of the projector housing, and likewise the hot air from intake 4 will be distributed evenly on both sides of the motor 7 of fan 2. This means that a cold layer of air will remain situated around the motor.

Duct 5 is provided with a curvature on one end thereof and, in addition, has a uniform cross section over the entire length thereof so that the air will have the same velocity across the whole duct and, at the same time, will not create turbulence. The curvature is also important for providing the air with a velocity component in the vertical direction, as mentioned above.

The horizontal air stream strikes the motor 7 and is sucked in on the side and along the motor 7. To ensure the optimal effect for the suction along motor 7 there is a provided a gap 9 between the fan motor and louver 6 in the order of 1 mm to 10 mm, preferably 3.5 mm.

It is difficult to stipulate an exact relationship between the curvature of the duct and the slanted positioning of the slats needed to achieve cancellation of the vertical air streams. By experimentation it is simplest to arrive at the size of the curvature radius by first determining the slanted position of the slats that will ensure that light is not emitted via the fan, and then to experiment with various curvatures of duct 5 until the best solution is found.

Duct 5 may be formed as a part of louver 6.

It will also be possible to omit the louver when it is not necessary to have a screen for the light. The curvature of duct 5 will then not be particularly critical. The main requirement would then be merely deflecting the air stream from intake 8 so that the motor is cooled on all sides.

## Claims

1. A projector comprising a light source (1), a suction fan (2) having an integrated motor (7), a plurality of air intakes (4, 8) and a louver (6); where the light source (1) is disposed between a first one of the air intakes (4) and the suction fan (2), which light source can thus emit heat to the air (A) flowing past it,
**characterized in that**
• a second air intake (8) is arranged so that it will suck in air (B) from the surroundings, such that the air temperature at the intake (8) is not substantially affected by the light source (1);
• the second air intake (8) is connected with a duct (5) which opens out at the upstream side of the fan motor (7), where the longitudinal axis of the duct at said opening is aligned to coincide substantially with the rotational axis of the motor;
so that the relatively cooler air stream (B) substantially encases the motor (7) and forms an insulating jacket, outside of which the relatively warmer air stream (A) heated by the light source is transported out of the projector, in order by this means to bring about a cooling of the motor (7) on operation, even though the temperature of the air stream (A) heated by the light source is higher than the motor is constructed to tolerate.

2. The projector according to claim 1, **characterized in that** the duct (5) is integrated in the louver (6) through which the air stream (A), heated by the light source (1), passes.

3. The projector according to claims 1 - 2, **characterized in that** the duct (5) is curved toward one side thereof and in addition has a uniform cross section across its entire length in order that the air shall have the same velocity over the entire duct and, at the same time, shall not create turbulence.

4. The projector according to claims 1 - 3, **characterized by** a gap (9) provided between the motor (7) of the fan (2) and the louver (6).

5. The projector according to claim 4, **characterized in that** the gap (9) has an opening of between 1 mm and 10 mm, preferably 3,5 mm.

## Revendications

1. Projecteur comprenant une source de lumière (1), un ventilateur aspirant (2) avec moteur (7) intégré, une pluralité de prises d'air (4, 8) et une grille (6); où la source de lumière (1) est disposée entre une première prise d'air (4) et le ventilateur aspirant (2), laquelle source de lumière peut donc transmettre de la chaleur au flux d'air (A) s'écoulant à coté de celle-ci, **caractérisé en ce que**
• une deuxième prise d'air (8) est agencée de telle manière qu'elle aspire de l'air (B) des alentours, de sorte que la température de l'air à la prise d'air (8) n'est pas substantiellement affectée par la source de lumière (1);
• la deuxième prise d'air (8) est reliée à un conduit (5) qui débouche du côté en amont du moteur (7) du ventilateur, l'axe longitudinal du conduit à l'endroit de ladite embouchure étant aligné de manière à coïncider substantiellement avec l'axe de rotation du moteur;
de sorte que le courant d'air (B) relativement plus frais entoure substantiellement le moteur (7) et forme une enveloppe isolante à l'extérieur de laquelle le courant d'air (A) relativement plus chaud, chauffé par la source de lumière, est transporté hors du projecteur, afin de produire ainsi un refroidissement du moteur (7) pendant son fonctionnement, bien que la température du courant d'air (A) chauffé par la source de lumière soit supérieure à celle admise par la construction du moteur.

2. Projecteur selon la revendication 1, **caractérisé en ce que** le conduit (5) est intégré dans la grille (6) par laquelle passe le courant d'air (A) chauffé par la source de lumière (1).

3. Projecteur selon la revendication 1-2, **caractérisé en ce que** le conduit (5) est courbé vers l'un de ses côtés et présente en plus une coupe transversale uniforme sur sa longueur entière pour que l'air ait la même vitesse dans le conduit entier et en même temps n'engendre pas de turbulences.

4. Projecteur selon la revendication 1-3, **caractérisé par** une fente (9) pourvue entre le moteur (7) du ventilateur (2) et la grille (6).

5. Projecteur selon la revendication 4, **caractérisé en ce que** la fente (9) présente une ouverture entre 1 mm et 10 mm, de préférence de 3,5 mm.

## Patentansprüche

1. Projektor mit einer Lichtquelle (1), einem Sauglüfter (2) mit integriertem Motor (7), mehreren Lufteinlässen (4, 8) und einem Gitter (6); wobei die Lichtquelle (1) zwischen einem ersten Lufteinlass (4) und dem Sauglüfter (2) angeordnet ist und somit Wärme an die daran vorbei strömende Luft (A) abgeben kann, **dadurch gekennzeichnet, dass**
• ein zweiter Lufteinlass (8) derart angeordnet ist, dass er Luft (B) von der Umgebung ansaugt, so dass die Lufttemperatur am Einlass (8) von der Lichtquelle (1) nicht wesentlich beeinflusst wird;
• der zweite Lufteinlass (8) mit einem Kanal (5) verbunden ist, der auf der stromaufwärts gerichteten Seite des Lüftermotors (7) mündet, wobei die Längsachse des Kanals bei der Mündung derart ausgerichtet ist, dass sie im Wesentlichen mit der Drehachse des Motors übereinstimmt;
so dass der vergleichsweise kühlere Luftstrom (B) den Motor (7) im wesentlichen umhüllt und einen isolierenden Mantel bildet, ausserhalb welchem der vergleichsweise wärmere, von der Lichtquelle erhitzte Luftstrom (A) aus dem Projektor befördert wird, wodurch eine Kühlung des Motors (7) im Betrieb erfolgt, obwohl die Temperatur des von der Lichtquelle erhitzten Luftstroms (A) höher ist als diejenige, für welche der Motor ausgelegt ist.

2. Projektor nach Anspruch 1, **dadurch gekennzeichnet, dass** der Kanal (5) im Gitter (6) integriert ist, durch welche der von der Lichtquelle (1) erhitzte Luftstrom (A) strömt.

3. Projektor nach Anspruch 1-2, **dadurch gekennzeichnet, dass** der Kanal (5) zur einen Seite gebogen ist und zudem auf der ganzen Länge einen gleichmässigen Querschnitt aufweist, damit die Luft im ganzen Kanal die gleiche Geschwindigkeit aufweist und zugleich keine Turbulenzen erzeugt.

4. Projektor nach Anspruch 1-3, **gekennzeichnet durch** einen zwischen dem Motor (7) des Lüfters (2) und dem Gitter (6) angeordneten Spalt (9).

5. Projektor nach Anspruch 4, **dadurch gekennzeichnet, dass** der Spalt (9) eine Öffnung zwischen 1 mm und 10 mm aufweist, vorzugsweise von 3,5 mm.
